# EUROPEAN PATENT APPLICATION

(11) **EP 4 610 917 A1**
(43) Date of publication of application: **03.09.2025**
(21) Application number: 23882570.7
(22) Date of filing: 23.10.2023
(51) Int. Cl.: G06Q 50/06

(54) **CONTROL METHOD, DEVICE, AND PROGRAM**

(30) Priority: 26.10.2022 US 202263419417 P
(71) Applicant: Panasonic Intellectual Property Management Co., Ltd., Kadoma-shi, Osaka 571-0057 (JP)
(72) Inventor: YAMAMOTO, Kakuya, 571-0057 Osaka (JP); UNAGAMI, Yuji, 571-0057 Osaka (JP)
(74) Representative: Appelt, Christian W.
(86) International application number: PCT/JP2023/038128
(87) International publication number: WO 2024/090365

(57) **Abstract**

A control method includes: obtaining first parking time information including a first parking duration of one or more first vehicles in a first facility (S105 and S107), the one or more first vehicles each running on electricity in a battery of the first vehicle; estimating a first charged amount of the one or more first vehicles charged from a first charger provided in the first facility based on the first parking time information obtained (S108); obtaining a first amount of self-consumption of renewable energy that has been consumed in the first facility (S113); and outputting information indicating whether the first charged amount of electricity has been generated using renewable energy based on the first charged amount estimated and the first amount of self-consumption obtained (S115, S116).

## Description

### [Technical Field]

The present disclosure relates to a control method, a device, and a program.

### [Background Art]

Patent Literature (PTL) 1 discloses a technology for recording, in a blockchain, information on electricity having an environmental credit.

### [Citation List]

### [Patent Literature]

[PTL 1]
Japanese Unexamined Patent Application Publication No. 2021-034826

### [Summary of Invention]

### [Technical Problem]

An object of the present disclosure is to provide a control method, etc., capable of easily adding information indicating that a charged amount obtained by charging with electricity generated using renewable energy has an environmental credit.

### [Solution to Problem]

An aspect of the present disclosure provides a control method for controlling a device. The control method includes: obtaining first parking time information including a first parking duration of one or more first vehicles in a first facility, the one or more first vehicles each running on electricity in a battery of the first vehicle; estimating a first charged amount of the one or more first vehicles charged from a first charger provided in the first facility based on the first parking time information obtained; obtaining a first amount of self-consumption of renewable energy that has been consumed in the first facility; and outputting information indicating whether the first charged amount of electricity has been generated using renewable energy based on the first charged amount estimated and the first amount of self-consumption obtained.

These general or specific aspects may be implemented using a system, an apparatus, an integrated circuit, a computer program, or a computer-readable recording medium such as a CD-ROM, or any combination of systems, apparatuses, integrated circuits, computer programs, and recording media.

### [Advantageous Effects of Invention]

According to the present disclosure, information indicating that a charged amount obtained by charging with electricity generated using renewable energy has an environmental credit can be easily added.

### [Brief Description of Drawings]

[FIG. 1]

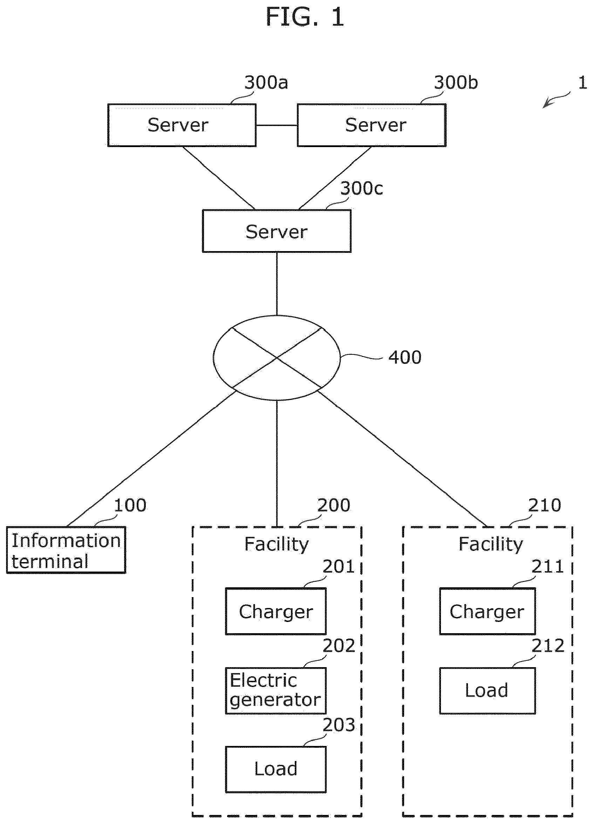

   FIG. 1 is a diagram illustrating an example of a configuration of a control system according to an embodiment.
[FIG. 2]

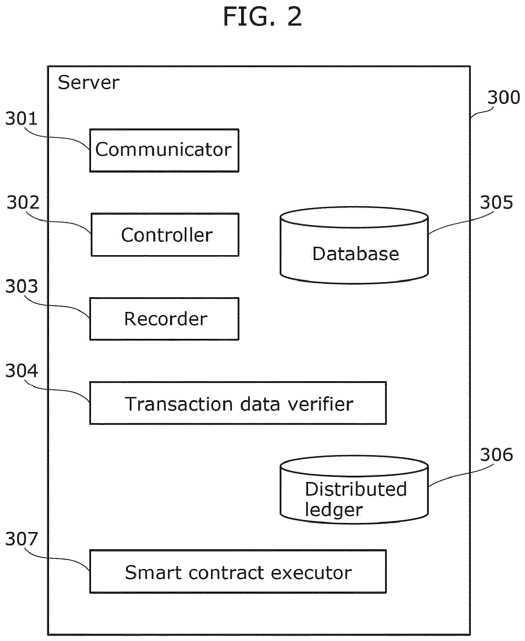

   FIG. 2 is a diagram illustrating an example of a configuration of a server according to the embodiment.
[FIG. 3]

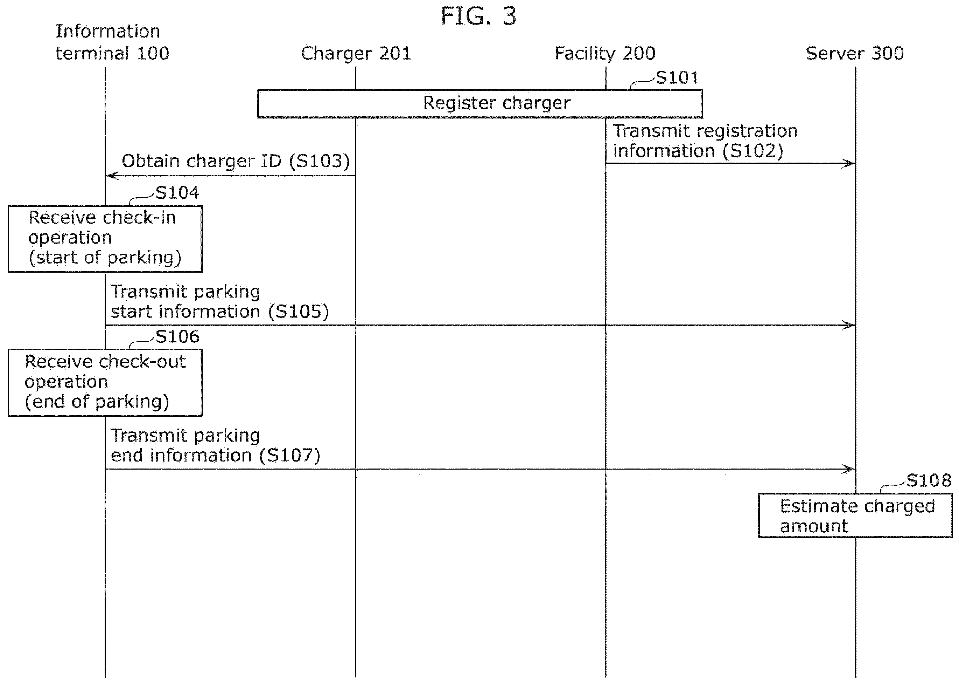

   FIG. 3 is a sequence diagram illustrating an example of operations of the control system according to the embodiment.
[FIG. 4]

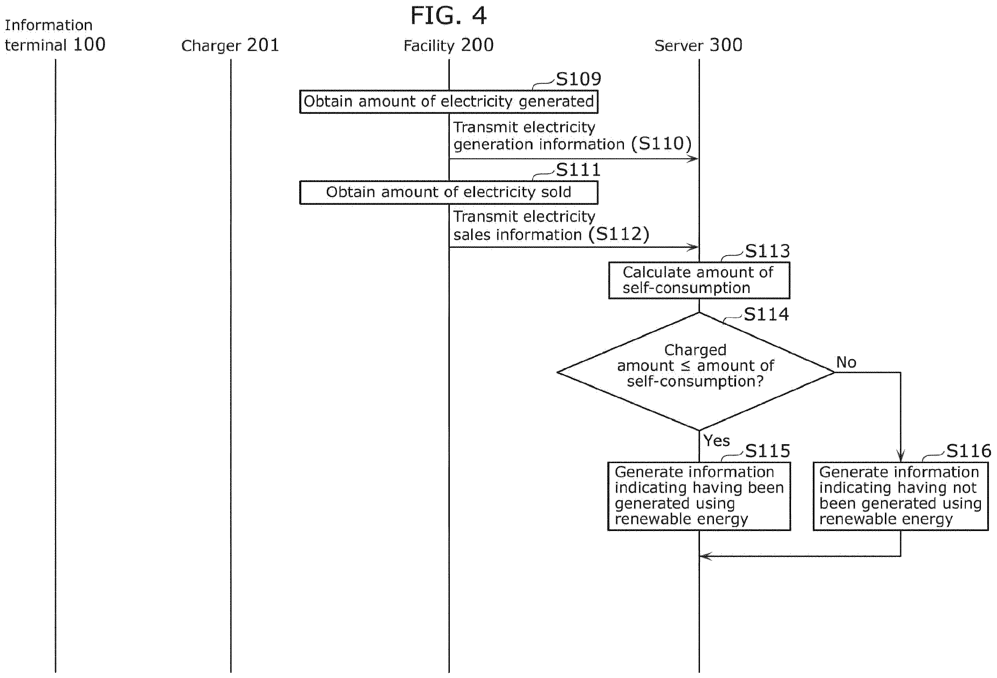

   FIG. 4 is a sequence diagram illustrating an example of operations of the control system according to the embodiment.
[FIG. 5]

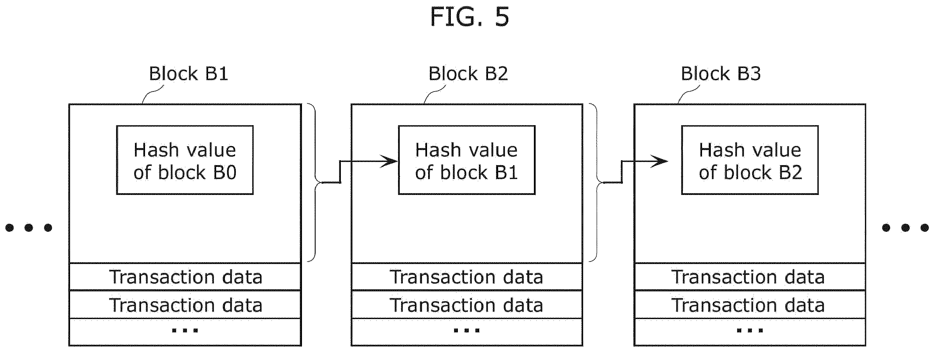

   FIG. 5 is an explanatory diagram illustrating a data structure of a blockchain.
[FIG. 6]

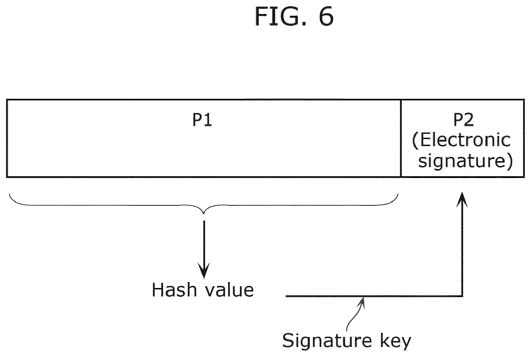

   FIG. 6 is an explanatory diagram illustrating a data structure of transaction data.

### [Description of Embodiment]

### (Underlying Knowledge Forming Basis of the Present Disclosure)

Conventionally, there are technologies for recording, in a blockchain, electricity transactions that provide environmental credits as in PTL 1, for example.

An environmental credit refers to an economic value resulting from a contribution to the reduction of environmental burdens in the production or use of electricity. For example, the environmental credit is the value of being electricity that has been generated using renewable energy, in particular, while reducing CO₂ emissions.

In the meantime, electric vehicles that run on electricity charged in their batteries are now widespread. The electric vehicles are required to be charged regularly, and a certain amount of time is required to charge the electric vehicles. Therefore, by charging an electric vehicle while the electric vehicle is parked in a parking lot, for example, the time during parking has been used as the time for charging.

Users of electric vehicles can charge their electric vehicles in parking lots everywhere. The electricity supplied in each parking lot is not necessarily electricity generated using renewable energy. Therefore, it is difficult for the users to always charge their electric vehicles with electricity generated using renewable energy.

In view of the above, the inventors of the present invention have found a control method capable of easily adding, by associating an environmental credit indicating that electricity has been generated using renewable energy with electricity used to charge an electric vehicle, information indicating that the charged amount obtained by charging with the electricity generated using renewable energy has an environmental credit.

A control method according to a first aspect of the present disclosure is a control method for controlling a device and includes: obtaining first parking time information including a first parking duration of one or more first vehicles in a first facility, the one or more first vehicles each running on electricity in a battery of the first vehicle; estimating a first charged amount of the one or more first vehicles charged from a first charger provided in the first facility based on the first parking time information obtained; obtaining a first amount of self-consumption of renewable energy that has been consumed in the first facility; and outputting information indicating whether the first charged amount of electricity has been generated using renewable energy based on the first charged amount estimated and the first amount of self-consumption obtained.

According to this, when the first charged amount is less than or equal to the first amount of self-consumption, for example, the first charged amount can be included in the first amount of self-consumption. The first charged amount of electricity can be therefore regarded as electricity generated using renewable energy. Thus, by outputting information indicating that the first charged amount of electricity has been generated using renewable energy, an environmental credit indicating that the electricity has been generated using renewable energy can be associated with the electricity used to charge the electric vehicle. This allows a user to easily indicate whether the charged amount of electricity obtained by charging the vehicle is electricity that has been generated using renewable energy and therefore has an environmental credit. Moreover, in the control method according to the first aspect of the present disclosure, since the charger needs not include a mechanism to measure charged amounts, the charger may not include such a mechanism. For example, the charger may simply be an electric outlet.

A control method according to a second aspect of the present disclosure is the control method according to the first aspect, in which the first amount of self-consumption is calculated by subtracting, from a first amount of electricity generated by a first electric generator, a first amount of electricity sold by the first facility provided with the first electric generator, the first electric generator being associated with the first charger and using renewable energy to generate electricity.

A control method according to a third aspect of the present disclosure is the control method according to the first aspect or the second aspect, in which in the outputting, when the first charged amount is less than or equal to the first amount of self-consumption, information indicating that the first charged amount of electricity has been generated using renewable energy is outputted.

A control method according to a fourth aspect of the present disclosure is the control method according to any one of the first to third aspects, in which the first parking duration is a total parking duration of the one or more first vehicles in the first facility during a first period of time, the first charged amount is a total charged amount of the one or more first vehicles charged during the first period of time, and the first amount of self-consumption is a total amount of self-consumption in the first facility during the first period of time.

This allows for easily indicating whether the charged amount calculated using the total parking duration during the first period of time has an environmental credit.

A control method according to a fifth aspect of the present disclosure is the control method according to any one of the first to fourth aspects, further including: obtaining second parking time information including a second parking duration of one or more second vehicles in a second facility, the one or more second vehicles each running on electricity in a battery of the second vehicle; estimating a second charged amount of the one or more second vehicles charged from a second charger provided in the second facility based on the second parking time information obtained; and obtaining a second amount of self-consumption of renewable energy that has been consumed in the second facility. In the outputting, information indicating whether total electricity obtained by adding the first charged amount of electricity and the second charged amount of electricity has been generated using renewable energy is outputted based on the first charged amount estimated and the second charged amount estimated as well as the first amount of self-consumption obtained and the second amount of self-consumption obtained.

A control method according to a sixth aspect of the present disclosure is the control method according to the fifth aspect, in which the second amount of self-consumption is calculated by subtracting, from a second amount of electricity generated by a second electric generator, a second amount of electricity sold by the second facility provided with the second electric generator, the second electric generator being associated with the second charger and using renewable energy to generate electricity.

A control method according to a seventh aspect of the present disclosure is the control method according to the fifth aspect or the sixth aspect, in which in the outputting, when a first sum that is a sum of the first charged amount and the second charged amount is less than or equal to a second sum that is a sum of the first amount of self-consumption and the second amount of self-consumption, information indicating that total electricity obtained by adding the first charged amount of electricity and the second charged amount of electricity has been generated using renewable energy is outputted.

A control method according to an eighth aspect of the present disclosure is the control method according to any one of the first to seventh aspects, further including: purchasing, when the first charged amount is greater than the first amount of self-consumption, an environmental credit indicating that an amount of electricity has been generated using renewable energy, the amount being based on a difference obtained by subtracting the first charged amount from the first amount of self-consumption.

A control method according to a ninth aspect of the present disclosure is the control method according to any one of the first to eighth aspects, further including: storing the information in a distributed ledger included in the device.

A device according to a tenth aspect of the present disclosure is a device including: a processor; and a memory. The processor uses the memory to perform: obtaining first parking time information including a first parking duration of one or more first vehicles in a first facility, the one or more first vehicles each running on electricity in a battery of the first vehicle; estimating a first charged amount of the one or more first vehicles charged from a first charger provided in the first facility based on the first parking time information obtained; obtaining a first amount of self-consumption of renewable energy that has been consumed in the first facility; and outputting information indicating whether the first charged amount of electricity has been generated using renewable energy based on the first charged amount estimated and the first amount of self-consumption obtained.

According to this, when the first charged amount is less than or equal to the first amount of self-consumption, for example, the first charged amount can be included in the first amount of self-consumption. The first charged amount of electricity can be therefore regarded as electricity generated using renewable energy. Thus, by outputting information indicating that the first charged amount of electricity has been generated using renewable energy, an environmental credit indicating that the electricity has been generated using renewable energy can be associated with the electricity used to charge the electric vehicle. This allows a user to easily indicate whether the charged amount of electricity obtained by charging the vehicle is electricity that has been generated using renewable energy and therefore has an environmental credit. Moreover, in the device according to the tenth aspect of the present disclosure, since the charger needs not include a mechanism to measure charged amounts, the charger may not include such a mechanism. For example, the charger may simply be an electric outlet.

A program according to an eleventh aspect of the present disclosure is a program for causing a computer to execute the control method according to any one of the first to ninth aspects.

These general or specific aspects may be implemented using a system, an apparatus, an integrated circuit, a computer program, or a computer-readable recording medium such as a CD-ROM, or any combination of systems, apparatuses, integrated circuits, computer programs, and recording media.

An embodiment will be described below with reference to the accompanying Drawings. Note that each of embodiments described below shows a specific example of the present disclosure. In other words, the numerical values, shapes, materials, elements, the arrangement and connection of the elements, steps, the processing order of the steps, etc. shown in the following embodiment are mere examples, and therefore do not limit the scope of the present disclosure. Moreover, among the elements in the following embodiment, those not recited in any one of the independent claims, representing the most superordinate concept, are described as elements that are not necessarily required to achieve the object of the present disclosure but constitute a more preferred embodiment.

### [Embodiment]

A configuration of a system according to the present disclosure will be described first.

A configuration, etc. of a management system according to the present embodiment will be described below with reference to the drawings.

### [Control System]

FIG. 1 is a diagram illustrating an example of a configuration of a control system according to the embodiment.

As shown in FIG. 1, control system 1 according to the present disclosure includes: information terminal 100; charger 201, electric generator 202, and load 203 provided in facility 200; charger 211 and load 212 provided in facility 210; and a plurality of servers 300a to 300c, for example. These are connected via network 400. Examples of network 400 include the Internet and a cell phone carrier network, but network 400 may be any communication line or network. Information terminal 100 is a terminal that receives operations performed by a user of a vehicle. Information terminal 100 may be a mobile terminal such as a smartphone owned by the user of the vehicle, or an information terminal installed in the vehicle.

Charger 201, electric generator 202, and load 203 are provided in facility 200. A parking lot where a vehicle is to be parked is also provided in facility 200. Charger 201 is a charger for charging a battery of the vehicle parked in the parking lot of facility 200 with electricity generated by electric generator 202 in facility 200. Here, the vehicle refers to a vehicle that includes a battery and runs on electricity stored in the battery. The vehicle may be an electric vehicle in which all of the energy needed for traveling is supplied by the electricity in the battery, or a hybrid vehicle (plug-in hybrid vehicle) in which some of the energy needed for traveling is supplied by the electricity in the battery. Note that charger 201 may charge the battery of the vehicle with electricity obtained from a commercial power source. Charger 201 may include no mechanism to measure charged amounts. Charger 201 may only include an electric outlet, for example.

Electric generator 202 is an electric generator that generates electricity using renewable energy. Electric generator 202 may generate electricity through photovoltaic power generation, wind power generation, etc., for example.

Load 203 is a device that consumes electricity in facility 200. Load 203 may consume electricity generated by electric generator 202 in facility 200, or may consume electricity obtained from the commercial power source.

In facility 200, consumed electricity, which is electricity consumed by charger 201 and load 203, and generated electricity, which is electricity obtained by electricity generation, are measured by electricity meters, and the measurement results are outputted to server 300. Such information obtained in facility 200 may be transmitted by a computer (not shown) in facility 200. The computer may obtain, from the electricity meters, the measurement results measured by the electricity meters in facility 200 and transmit the obtained measurement results to server 300, together with information on facility 200. The information on facility 200 may include a charger ID to identify charger 201 provided in facility 200. The information on facility 200 may also include a facility ID to identify facility 200 or a parking lot ID to identify the parking lot of facility 200.

Charger 211 and load 212 are provided in facility 210. A parking lot where a vehicle is to be parked is also provided in facility 210. Charger 211 is a charger for charging a battery of the vehicle parked in the parking lot of facility 210 with electricity obtained from a commercial power source. Here, the vehicle is a vehicle that includes a battery and runs on electricity stored in the battery.

Load 212 is a device that consumes electricity in facility 210. Load 212 may consume electricity obtained from the commercial power source in facility 210.

In facility 210, consumed electricity, which is electricity consumed by charger 211 and load 212, is measured by an electricity meter, and the measurement result is outputted to server 300. Such information obtained in facility 210 may be transmitted by a computer (not shown) in facility 210. The computer may obtain, from the electricity meter, the measurement result measured by the electricity meter in facility 210 and transmit the obtained measurement result to server 300, together with information on facility 210. The information on facility 210 may include a charger ID to identify charger 211 provided in facility 210. The information on facility 210 may also include a facility ID to identify facility 210 or a parking lot ID to identify the parking lot of facility 210.

Facilities 200 and 210 are, for example, houses that provide parking spaces as parking lots and that are equipped with chargers 201 and 211 for charging vehicles parked in the parking spaces. In this case, charged amounts by chargers 201 and 211 provided in the houses are often not managed by servers 300a to 300c. Thus, it is difficult for servers 300a to 300c to obtain amounts of electricity charged to the vehicles by chargers 201 and 211 during periods of time in which the vehicles have been parked in the parking lots (parking durations). Thus, it is necessary to estimate the amounts of electricity charged to the vehicles during the parking durations.

Servers 300a to 300c transmit and receive information to and from information terminal 100 and facilities 200 and 210. For example, servers 300a to 300c obtain information on the use of a parking lot from information terminal 100. For example, servers 300a to 300c obtain, from facility 200, consumed electricity and generated electricity in facility 200 and obtain, from facility 210, consumed electricity in facility 210.

Hereinafter, each of servers 300a to 300c is also referred to as server 300, but servers 300a to 300c may sometimes be referred to as servers A to C, respectively.

Control system 1 is a system that manages parking of a vehicle of a user. Control system 1 manages generated electricity and consumed electricity in a parking lot. By managing the parking of the vehicle of the user as well as the generated electricity and the consumed electricity at the place where the vehicle is parked, control system 1 manages whether electricity used for charging by the user is renewable energy. In other words, control system 1 manages whether the electricity used for charging the vehicle of the user while the vehicle is parked in the parking lot in the facility has an environmental credit.

### [Information Terminal 100]

Information terminal 100 receives an operational input by the user. Information terminal 100 receives the start of parking for the vehicle of the user and the start of charging for the vehicle of the user. The following will be described using, as an example, a case where the user parks the vehicle in the parking lot of facility 200 and charges the vehicle using charger 201 in facility 200. In this case, an application for managing parking and charging is started on information terminal 100, and a charger ID of charger 201 is received by the application. For example, information terminal 100 may receive the charger ID of charger 201 by reading a two-dimensional code (Quick Response (QR) code (registered trademark)) provided on charger 201 using a camera of information terminal 100. Upon receiving, from the user, an input indicating the start of parking (the start of charging) on the application of information terminal 100, information terminal 100 transmits, to server 300, information indicating the start of parking (the start of charging). After information terminal 100 transmits, to server 300, the information indicating the start of parking (the start of charging), information terminal 100 transmits, to server 300, information indicating the end of parking (the end of charging) upon receiving, from the user, an input indicating the end of parking (the end of charging).

As just described, information terminal 100 transmits, to server 300, parking time information regarding the facility where the vehicle has been parked and an amount of time the vehicle has been parked (an amount of time the vehicle has been charged) using the application that manages parking and charging. The parking time information includes, for example, a user ID, a charger ID, and a parking start time, or a user ID, a charger ID, and a parking end time. The information to be transmitted by information terminal 100 to server 300 may be transmitted as transaction data. By executing a consensus algorithm on the transaction data received from information terminal 100, server 300 may store a block containing the received transaction data in distributed ledger 306 included in server 300.

Communication between information terminal 100 and server 300 may be established via transport layer security (TLS), and a cryptographic key for the TLS communication may be stored in a memory of information terminal 100.

### [Server 300]

FIG. 2 is a diagram illustrating an example of a configuration of the server according to the embodiment.

As shown in FIG. 2, server 300 includes communicator 301, controller 302, recorder 303, transaction data verifier 304, database 305, distributed ledger 306, and smart contract executor 307.

Communicator 301 transmits and receives information to and from information terminal 100 via network 400. Such information received from information terminal 100 is, for example, parking time information regarding the facility where the user has parked the vehicle and the amount of time the vehicle has been parked (the amount of time the vehicle has been charged).

Communicator 301 also transmits and receives information to and from facilities 200 and 210 via network 400. The information received from facility 200 includes, for example, generated electricity and consumed electricity in facility 200. The information received from facility 210 includes, for example, consumed electricity in facility 210.

Communicator 301 also communicates with other servers 300 via network 400. Communicator 301 transmits and receives transaction data to and from other servers 300.

As described above, communicator 301 communicates with information terminal 100 via network 400. The communication may be established via transport layer security (TLS), and a cryptographic key for the TLS communication may be held by communicator 301.

Controller 302 executes the consensus algorithm on the transaction data received by communicator 301. As a result of this, controller 302 stores the transaction data in distributed ledger 306. By connecting a block containing the transaction data to a blockchain of distributed ledger 306, for example, controller 302 stores, in the blockchain, information contained in the transaction data.

Based on the parking time information received by communicator 301, controller 302 estimates a charged amount obtained by charging the vehicle of the user indicated by the user ID by charger 201 indicated by the charger ID. Specifically, controller 302 estimates the charged amount assuming that the vehicle has been charged at the maximum power output of charger 201 during the entire parking duration from the parking start time to the parking end time.

For example, controller 302 calculates the parking duration, which is an amount of time from the parking start time to the parking end time, based on the parking start time and the parking end time. Controller 302 then estimates the charged amount charged during the parking duration by multiplying the maximum power output of charger 201, which is indicated by the charger ID, by the parking duration. The maximum power output of charger 201 may be recorded in database 305 of server 300 in association with the charger ID. Since the charged amount estimated is the maximum value for the charged amount to be charged during the parking duration, an actual charged amount of the vehicle of the user is less than or equal to the charged amount estimated.

Controller 302 calculates an amount of self-consumption in facility 200 by subtracting an amount of electricity sold by facility 200 from an amount of electricity generated by electric generator 202 associated with charger 201 indicated by the charger ID. Note that the amount of self-consumption is also referred to as an amount of captive consumption. The amount of self-consumption may be calculated not by controller 302 but by the computer in facility 200. In such a case, the amount of self-consumption in facility 200, which has been calculated by the computer in facility 200, is included in information to be transmitted from facility 200 to server 300. In this manner, server 300 may obtain the amount of self-consumption in facility 200 from the computer in facility 200 without calculating, in server 300, the amount of self-consumption in facility 200. The amount of self-consumption may be calculated by any computers other than the computer in facility 200, and may be transmitted from such computers to server 300.

Based on the charged amount estimated and the amount of self-consumption obtained, controller 302 outputs information (environmental credit information) indicating whether the estimated charged amount of electricity has been generated using renewable energy. Specifically, controller 302 determines whether the charged amount is not more than the amount of self-consumption. When the charged amount is less than or equal to the amount of self-consumption, controller 302 outputs information (environmental credit information) indicating that the charged amount of electricity has been generated using renewable energy. By generating transaction data containing the environmental credit information, causing communicator 301 to transmit the generated transaction data to other servers 300, and executing the consensus algorithm with other servers 300, controller 302 may store a block containing the transaction data in distributed ledger 306 included in server 300.

The parking duration may be an amount of time spent on a single parking session of a vehicle or may be the sum of amounts of time spent on a plurality of parking sessions. The plurality of parking sessions are parking sessions occurred during a first period of time. The first period of time may be a week or a month. In such a case, a charged amount may be a total charged amount of the vehicle of the user charged during the first period of time. An amount of self-consumption may also be a total amount of self-consumption in the facility where the vehicle of the user has been parked during the first period of time. Accordingly, controller 302 may determine whether electricity in the total charged amount of the vehicle of the user has been generated using renewable energy based on the total parking duration of the vehicle of the user during the first period of time. The parking duration of the vehicle of the user may be parking duration at the parking lot in particular facility 200. This allows for determining whether the charged amount of electricity in the vehicle of the user, which is calculated based on the total parking duration in particular facility 200 during the first period of time, has been generated using renewable energy.

When communicator 301 receives transaction data, transaction data verifier 304 verifies the validity of the transaction data. For example, transaction data verifier 304 verifies, for example, whether the transaction data received by communicator 301 has been attached with an electronic signature generated in a correct way. Once the validity is verified, communicator 301 transmits the duplication of the transaction data to other servers 300 to cause the verified data to be recorded in the recorders of other servers 300. This allows only the transaction data whose validity has been verified to be transmitted to other servers, thus reducing an increase in the power consumption of the computer. Note that such verification may be skipped.

Transaction data verifier 304, together with other servers 300, executes a consensus algorithm to agree on the validity of the transaction data.

Here, practical byzantine fault tolerance (PBFT) or any other known consensus algorithm may be used as the consensus algorithm. Examples of known consensus algorithms include proof of work (PoW) or proof of stake (PoS). When PBFT is used as the consensus algorithm, transaction data verifier 304 receives, from each of the plurality of servers 300, a report indicating whether the transaction data has been verified successfully, and determines whether the number of such reports exceeds a predetermined number. When the number of such reports exceeds the predetermined number, transaction data verifier 304 may determine that the validity of the transaction data has been verified by the consensus algorithm.

Once the validity of the transaction data is confirmed, transaction data verifier 304 causes recorder 303 to record the transaction data. When the validity of the transaction data cannot be verified, transaction data verifier 304 discards the transaction data. This can reduce a required amount of computer resources because such transaction data whose validity cannot be verified is not recorded in the recorder. Transaction data verifier 304 may generate a block containing the transaction data whose validity has been verified and store the generated block in distributed ledger 306.

In the present embodiment, transaction data verifier 304 verifies the validity of the transaction data received by communicator 301.

Recorder 303 records the transaction data whose validity has been verified by transaction data verifier 304 by storing such transaction data in distributed ledger 306. This can prevent tampering with the transaction data from occurring.

Note that recorder 303 may be configured inside distributed ledger 306.

Database 305 stores the information received from facilities 200 and 210 by communicator 301. Database 305 is implemented by a storage.

Distributed ledger 306 stores transaction data. Since distributed ledger 306 obtains and stores transaction data one after another, one or more transaction data items are stored in distributed ledger 306. Distributed ledger 306 is implemented by a storage.

Smart contract executor 307 runs a smart contract by executing, for example, a contract code contained in the transaction data stored in the blockchain of distributed ledger 306. Smart contract executor 307 may perform, for example, a process of calculating a parking duration in controller 302, a process of estimating a charged amount, and a process of determining whether electricity for the vehicle of the user has been generated using renewable energy. When the transaction data is stored in the blockchain of distributed ledger 306, smart contract executor 307 may run smart contracts for the processes mentioned above.

As just described, smart contract executor 307 can manage various processes using the distributed ledger by running the smart contracts. For example, it is assumed that smart contracts are generated by the application of information terminal 100 based on operations from the user and blocks containing these smart contracts are stored in the blockchain in advance. In other words, the blockchain stores contract codes of the smart contracts.

Note that the contract codes of the smart contracts may be separated into a plurality of data units and stored separately in the blockchain, or may be stored in the blockchain as a single integrated contract code.

### [Operations]

Operations of control system 1 configured as described above will be described next.

FIGS. 3 and 4 are sequence diagrams illustrating an example of the operations of the control system according to the embodiment. Note that FIG. 4 shows a continuation of the sequence diagram in FIG. 3. Facility 200 in FIGS. 3 and 4 represents a computer (not shown) provided in facility 200. In other words, the computer provided in facility 200 is hereinafter referred to simply as facility 200.

First, charger 201 and facility 200 perform registration of charger 201 (S101). For example, facility 200 receives an input from an administrator of facility 200 and performs a process of registering, as the charger in facility 200, the charger ID indicated by the two-dimensional code attached to charger 201, the maximum power output of charger 201, and an administrator ID to identify the administrator. This generates registration information including the charger ID, the maximum power output of charger 201, and the administrator ID.

Facility 200 transmits, to server 300, the registration information generated by performing step S101 (S102). It is sufficient for facility 200 to transmit the registration information to at least one server 300 among servers 300a to 300c.

Next, in a case where the user charges the vehicle of the user while the vehicle is parked in the parking lot of facility 200, the user starts the application of information terminal 100.

Information terminal 100 receives an operation by the user and obtains the charger ID of charger 201 via the application (S103). Information terminal 100 obtains the charger ID of charger 201 by reading the two-dimensional code (Quick Response (QR) code) provided on charger 201 using the camera included in information terminal 100.

Next, information terminal 100 receives a check-in operation (S104). Specifically, information terminal 100 receives, from the user, an operation indicating the start of parking (the start of charging).

This causes information terminal 100 to generate parking start information including a parking start time, the charger ID, and a user ID, and information terminal 100 transmits the parking start information to server 300 (S105). Note that the parking start time refers to the time when the check-in operation was received in step S104. The user ID is information registered in information terminal 100 for identifying the user. The parking start information may include a parking ID to identify a single parking session. Information terminal 100 may transmit, to server 300, transaction data including the parking start information. The transaction data including the parking start information may be stored in the blockchain.

Next, information terminal 100 receives a check-out operation (S106). Specifically, information terminal 100 receives, from the user, an operation indicating the end of parking (the end of charging).

This causes information terminal 100 to generate parking end information including a parking end time, the charger ID, and the user ID, and information terminal 100 transmits the parking end information to server 300 (S107). Note that the parking end time refers to the time when the check-out operation was received in step S106. The user ID is information registered in information terminal 100 for identifying the user. The parking end information may include a parking ID. The parking ID included in the parking end information is the same as the parking ID included in the parking start information. Information terminal 100 may transmit, to server 300, transaction data including the parking end information. The transaction data including the parking end information may be stored in the blockchain.

Upon receiving the parking start information and the parking end information, server 300 estimates a charged amount in the parking (S108). Such estimation may be performed by executing a smart contract when the transaction data including the parking end information is received. In the smart contract, the parking start information including the same parking ID as the parking ID included in the parking end information is first identified, and then the parking duration is calculated based on the parking end time included in the parking end information included in the received transaction data, and the parking start time included in the identified parking start information. Subsequently, based on the charger ID included in the parking start information or the parking end information, the maximum power output associated with the charger ID is identified, and the charged amount is estimated by multiplying the calculated parking duration by the maximum power output.

Next, facility 200 obtains, from the electricity meter, an amount of electricity generated by electric generator 202 provided in facility 200 (S109). The amount of electricity generated is, for example, an amount of electricity generated by electric generator 202 during a predetermined period of time. The predetermined period of time is, for example, one day, one week, two weeks, or one month.

Facility 200 transmits electricity generation information to server 300 (S110). The electricity generation information includes the amount of electricity generated by electric generator 202 provided in facility 200 and the administrator ID to identify the administrator of facility 200. The electricity generation information may include an electric generator ID to identify electric generator 202 instead of the administrator ID. The electricity generation information may be transmitted on a predetermined periodic basis, for example. Facility 200 may transmit, to server 300, transaction data including the electricity generation information. The transaction data including the electricity generation information may be stored in the blockchain.

Facility 200 obtains, from the electricity meter, an amount of electricity sold (S111). The amount of electricity sold is, for example, an amount of electricity sold by facility 200 during a predetermined period of time. The predetermined period of time is, for example, one day, one week, two weeks, or one month. The amount of electricity sold refers to an amount of electricity outputted from facility 200 to the power grid. The amount of electricity sold is an amount of electricity that could not be used up by charger 201 and load 203 in facility 200 out of the amount of electricity generated by electric generator 202. Thus, an amount of self-consumption in facility 200 is calculated by subtracting the amount of electricity sold from the amount of electricity generated.

Facility 200 transmits electricity sales information to server 300 (S112). The electricity sales information includes the amount of electricity sold by facility 200 and the administrator ID to identify the administrator of facility 200. The electricity sales information may include the electric generator ID to identify electric generator 202 instead of the administrator ID. The electricity sales information may be transmitted on a predetermined periodic basis, for example. Facility 200 may transmit, to server 300, transaction data including the electricity sales information. The transaction data including the electricity sales information may be stored in the blockchain.

Upon receiving the electricity generation information and the electricity sales information, server 300 calculates an amount of self-consumption in facility 200 (S113). Such calculation may be performed by executing a smart contract when the transaction data including the electricity generation information and the transaction data including the electricity sales information are received. In the smart contract, the electricity generation information including the same administrator ID as the administrator ID included in the electricity sales information is identified, and the amount of self-consumption is calculated by subtracting the amount of electricity sold, which is included in the electricity sales information included in the received transaction data, from the amount of electricity generated, which is included in the identified electricity generation information. Note that subsequent step S114 may also be executed by a smart contract.

Server 300 determines whether the charged amount estimated in step S108 is less than or equal to the amount of self-consumption calculated in step S113 (S114).

When the charged amount is less than or equal to the amount of self-consumption (Yes in S114), server 300 outputs environmental credit information indicating that the charged amount of electricity has been generated using renewable energy (S115).

When the charged amount is greater than the amount of self-consumption (No in S114), server 300 may output environmental credit information indicating that the charged amount of electricity has not been generated using renewable energy (S116).

Server 300 may generate transaction data including the environmental credit information outputted in step S115 or step S116 and store the transaction data in the blockchain by executing a consensus algorithm on the generated transaction data.

### [Effects, etc.]

A control method according to the present embodiment is a method for controlling one or more devices. The control method includes: obtaining (S105 and S107) first parking time information including a first parking duration of one or more first vehicles in a first facility, the one or more first vehicles each running on electricity in a battery of the first vehicle; estimating (S108) a first charged amount of the one or more first vehicles charged from a first charger provided in the first facility based on the first parking time information obtained; obtaining (S113) a first amount of self-consumption in the first facility, the first amount of self-consumption being calculated by subtracting, from a first amount of electricity generated by a first electric generator, a first amount of electricity sold by the first facility provided with the first electric generator, the first electric generator being associated with the first charger and using renewable energy to generate electricity; and outputting (S115, S116) information indicating whether the first charged amount of electricity has been generated using renewable energy based on the first charged amount estimated and the first amount of self-consumption obtained.

In the outputting, when the first charged amount is less than or equal to the first amount of self-consumption, information indicating that the first charged amount of electricity has been generated using renewable energy is outputted.

According to this, when the first charged amount is less than or equal to the first amount of self-consumption, the first charged amount can be included in the first amount of self-consumption. The first charged amount of electricity can be therefore regarded as electricity generated by the first electric generator. Thus, by outputting information indicating that the first charged amount of electricity has been generated using renewable energy, an environmental credit indicating that the electricity has been generated using renewable energy can be associated with the electricity used to charge the electric vehicle. This allows the user to easily indicate whether the charged amount of electricity obtained by charging the vehicle is electricity that has been generated using renewable energy and therefore has an environmental credit.

Moreover, according to the control method of the present embodiment, the charger needs not include a structure or mechanism (a measuring instrument) to measure charged amounts. In other words, in facilities 200 and 210 in control system 1, chargers 201 and 211 may not include a structure or mechanism (a measuring instrument) to measure charged amounts.

Moreover, according to the control method of the present embodiment, the first parking duration is the total parking duration of the one or more first vehicles in the first facility during a first period of time. The first charged amount is the total charged amount of the one or more first vehicles charged during the first period of time. The first amount of self-consumption is the total amount of self-consumption in the first facility during the first period of time.

This allows for easily indicating whether the charged amount calculated using the total parking duration during the first period of time has an environmental credit.

### [Variations]

(1) Although information indicating whether a charged amount of electricity obtained by charging a single vehicle has been generated using renewable energy is outputted in the above embodiment, information indicating whether a charged amount of electricity obtained by charging a plurality of vehicles has been generated using renewable energy may be outputted. In this case, server 300 obtains parking start information and parking end information for each of the plurality of vehicles, and calculates the sum of charged amounts for the vehicles. Server 300 may then compare the sum of the charged amounts with an amount of self-consumption in facility 200 where the vehicles have been parked to output information indicating whether the total charged amount of electricity has been generated using renewable energy.

In the above embodiment, the charged amount for the vehicle is compared with the amount of self-consumption in one facility 200 to output information indicating whether the charged amount of electricity has been generated using renewable energy. However, the amount of self-consumption to be compared with the charged amount may be an amount of self-consumption for a plurality of facilities 200 without being limited to one facility 200. In such a case, server 300 may compare the charged amount for the vehicle with the sum of the amounts of self-consumption in the plurality of facilities 200 to output information indicating whether the charged amount of electricity has been generated using renewable energy.

Specifically, server 300 may further obtain second parking time information including a second parking duration of one or more second vehicles in a second facility, the one or more second vehicles each running on electricity in a battery of the second vehicle, estimate a second charged amount of the one or more second vehicles charged from a second charger provided in the second facility based on the second parking time information obtained, and obtain a second amount of self-consumption in the second facility, the second amount of self-consumption being calculated by subtracting, from a second amount of electricity generated by a second electric generator, a second amount of electricity sold by the second facility provided with the second electric generator, the second electric generator being associated with the second charger and using renewable energy to generate electricity. In the outputting, information indicating whether total electricity obtained by adding the first charged amount of electricity and the second charged amount of electricity has been generated using renewable energy is outputted based on the first charged amount estimated and the second charged amount estimated as well as the first amount of self-consumption obtained and the second amount of self-consumption obtained. Specifically, in the outputting, when a first sum that is a sum of the first charged amount and the second charged amount is less than or equal to a second sum that is a sum of the first amount of self-consumption and the second amount of self-consumption, server 300 outputs information indicating that total electricity obtained by adding the first charged amount of electricity and the second charged amount of electricity has been generated using renewable energy.

As described above, by calculating the sum of charged amounts and the sum of amounts of self-consumption for a plurality of vehicles and a plurality of facilities without being limited to a single vehicle or a single facility, information indicating whether the total charged amount of electricity has been generated using renewable energy can be outputted as in the case of a single vehicle and a single facility.
(2) In the above embodiment, when the charged amount is greater than the amount of self-consumption, server 300 generates information indicating that the electricity has not been generated using renewable energy. However, the present disclosure is not limited thereto. For example, when the charged amount is greater than the amount of self-consumption, server 300 may purchase an environmental credit indicating that electricity in an amount based on the difference obtained by subtracting the charged amount from the amount of self-consumption has been generated using renewable energy. Such an environmental credit may be purchased from a producer of electricity (generator of electricity) generated using renewable energy or an aggregator of electricity generated using renewable energy.
(3) In the above embodiment, the determination of step S114 to generate an environmental credit may be performed for the electricity charged by charger 211 in facility 210 provided with no electric generator. In other words, charger 211 in facility 210 may be treated as the charger provided in facility 200. This allows an environmental credit to be assigned also to electricity charged by charger 211 in facility 210 provided with no electric generator that uses renewable energy to generate electricity. This can encourage the use of charger 211 in facility 210, thereby reducing the loss of charging opportunities.

### [Supplementary Description]

The distributed ledger in the above embodiment or variations will be supplementarily described. Here, a blockchain is described as an example of the distributed ledger, but the same applies to other distributed ledgers.

FIG. 5 is an explanatory diagram illustrating a data structure of a blockchain.

The blockchain refers to blocks connected in a chain, each of which is a recording unit in the blockchain. Each block includes a plurality of transaction data items and a hash value of its immediately preceding block. Specifically, block B2 includes the hash value of immediately preceding block B1. A hash value calculated from a plurality of transaction data items included in block B2 and the hash value of block B1 is then included in block B3 as the hash value of block B2. By connecting the blocks in a chain while including the contents of previous blocks as hash values as described above, tampering with the recorded transaction data can be effectively prevented from occurring.

If previous transaction data were altered, the hash value of the block would be different from the value before the alteration. In order to make the altered block appear correct, all of the subsequent blocks must be recreated. Such a task is very difficult in reality. Through the use of such a characteristic, the difficulty of tampering is guaranteed in the blockchain.

FIG. 6 is an explanatory diagram illustrating a data structure of transaction data.

The transaction data illustrated in FIG. 6 includes transaction body P1 and digital signature P2. Transaction body P1 is a data body included in the transaction data. Digital signature P2 is a digital signature generated by using a signature key of a creator of the transaction data for a hash value of transaction body P1. More specifically, digital signature P2 is generated by encrypting the hash value with a private key of the creator of the transaction data. Examples of digital signature schemes include an elliptic curve digital signature algorithm (ECDSA), CRYSTALS-Dilithium, Falcon, and SPHINCS+.

Since the transaction data includes digital signature P2, tampering with the transaction data is virtually impossible. If the transaction data were tampered with, verification using digital signature P2 would fail, thereby revealing that the transaction data has been tampered with. This prevents tampering with transaction body P1 from occurring.

Each of the elements in each of the above-described embodiment and variations may be configured in the form of an exclusive hardware product, or may be realized by executing a software program suitable for the element. Each of the elements may be realized by means of a program executing unit, such as a CPU or a processor, reading and executing the software program recorded on a recording medium such as a hard disk or a semiconductor memory. Here, the software program for realizing the information processing device (i.e., a virtual space management server) according to each of the above-described embodiment and variations is a program described below.

Specifically, the program is a program for causing a computer to execute an information processing method to be executed by an information processing device using a processor. The information processing method includes: obtaining credit information held by a user, the credit information indicating a contribution to the natural environment as an environmental credit; determining a function to be provided to the user using a virtual space generated by the computer in accordance with the environmental credit indicated in the credit information obtained; and providing, to the user, the function determined.

The information processing devices (i.e., the servers), etc. according to one or more aspects have been described above with reference to the embodiment, but the present invention is not limited to this embodiment. Forms obtained by making various modifications to the embodiment that can be conceived by those skilled in the art, as well as forms obtained by combining structural components in different embodiments, without materially departing from the spirit of the present invention, may be included in the scope of the one or more aspects.

### [Industrial Applicability]

The present disclosure can be used, for example, as a control method capable of easily adding information indicating that a charged amount obtained by charging with electricity generated using renewable energy has an environmental credit.

### [Reference Signs List]

1 control system
100 information terminal
200, 210 facility
201, 211 charger
202 electric generator
203, 212 load
300a to 300c server
301 communicator
302 controller
303 recorder
304 transaction data verifier
305 database
306 distributed ledger
307 smart contract executor
400 network

## Claims

1. A control method for controlling a device, the control method comprising:
obtaining first parking time information including a first parking duration of one or more first vehicles in a first facility, the one or more first vehicles each running on electricity in a battery of the first vehicle;
estimating a first charged amount of the one or more first vehicles charged from a first charger provided in the first facility based on the first parking time information obtained;
obtaining a first amount of self-consumption of renewable energy that has been consumed in the first facility; and
outputting information indicating whether the first charged amount of electricity has been generated using renewable energy based on the first charged amount estimated and the first amount of self-consumption obtained.

2. The control method according to claim 1,
wherein the first amount of self-consumption is calculated by subtracting, from a first amount of electricity generated by a first electric generator, a first amount of electricity sold by the first facility provided with the first electric generator, the first electric generator being associated with the first charger and using renewable energy to generate electricity.

3. The control method according to claim 1,
wherein in the outputting, when the first charged amount is less than or equal to the first amount of self-consumption, information indicating that the first charged amount of electricity has been generated using renewable energy is outputted.

4. The control method according to any one of claims 1 to 3,
wherein the first parking duration is a total parking duration of the one or more first vehicles in the first facility during a first period of time,
the first charged amount is a total charged amount of the one or more first vehicles charged during the first period of time, and
the first amount of self-consumption is a total amount of self-consumption in the first facility during the first period of time.

5. The control method according to any one of claims 1 to 3, further comprising:
obtaining second parking time information including a second parking duration of one or more second vehicles in a second facility, the one or more second vehicles each running on electricity in a battery of the second vehicle;
estimating a second charged amount of the one or more second vehicles charged from a second charger provided in the second facility based on the second parking time information obtained; and
obtaining a second amount of self-consumption of renewable energy that has been consumed in the second facility,
wherein in the outputting, information indicating whether total electricity obtained by adding the first charged amount of electricity and the second charged amount of electricity has been generated using renewable energy is outputted based on the first charged amount estimated and the second charged amount estimated as well as the first amount of self-consumption obtained and the second amount of self-consumption obtained.

6. The control method according to claim 5,
wherein the second amount of self-consumption is calculated by subtracting, from a second amount of electricity generated by a second electric generator, a second amount of electricity sold by the second facility provided with the second electric generator, the second electric generator being associated with the second charger and using renewable energy to generate electricity.

7. The control method according to claim 5,
wherein in the outputting, when a first sum that is a sum of the first charged amount and the second charged amount is less than or equal to a second sum that is a sum of the first amount of self-consumption and the second amount of self-consumption, information indicating that total electricity obtained by adding the first charged amount of electricity and the second charged amount of electricity has been generated using renewable energy is outputted.

8. The control method according to any one of claims 1 to 3, further comprising:
purchasing, when the first charged amount is greater than the first amount of self-consumption, an environmental credit indicating that an amount of electricity has been generated using renewable energy, the amount being based on a difference obtained by subtracting the first charged amount from the first amount of self-consumption.

9. The control method according to any one of claims 1 to 3, further comprising:
storing the information in a distributed ledger included in the device.

10. A device comprising:
a processor; and
a memory,
wherein the processor uses the memory to perform:
obtaining first parking time information including a first parking duration of one or more first vehicles in a first facility, the one or more first vehicles each running on electricity in a battery of the first vehicle;
estimating a first charged amount of the one or more first vehicles charged from a first charger provided in the first facility based on the first parking time information obtained;
obtaining a first amount of self-consumption of renewable energy that has been consumed in the first facility; and
outputting information indicating whether the first charged amount of electricity has been generated using renewable energy based on the first charged amount estimated and the first amount of self-consumption obtained.

11. A program for causing a computer to execute the control method according to claim 1.
